# EUROPEAN PATENT SPECIFICATION

(11) **EP 1 466 044 B1**
(45) Date of publication and mention of the grant of the patent: **22.03.2006**
(21) Application number: 02788071.5
(22) Date of filing: 29.11.2002
(51) Int. Cl.: D04H 1/46, D04H 1/54

(54) **FORMATION OF SHEET MATERIAL USING HYDROENTANGLEMENT**
HERSTELLUNG EINER FASERBAHN MITTELS HYDRODYNAMISCHER VERNADELUNG
FORMATION DE MATERIAU EN FEUILLE AU MOYEN DE LIAGE PAR JET D'EAU

(30) Priority: 30.11.2001 GB 0128692
(43) Date of publication of application: 13.10.2004
(73) Proprietor: B & H Research Limited, Lincolnshire PE 9 2QR (GB)
(72) Inventor: BEVAN, Christopher Graham, Stamford, Lincolnshire PE9 2QR (GB)
(74) Representative: Wilson Gunn
(86) International application number: PCT/GB2002/005381
(87) International publication number: WO 2003/048437

(56) References cited:
- WO-A-01/31131
- WO-A-01/94673
- WO-A-96/39553
- DE-A- 19 807 821
- FR-A- 2 601 970
- US-B1- 6 264 879
- PATENT ABSTRACTS OF JAPAN vol. 014, no. 188 (C-0710), 17 April 1990 (1990-04-17) & JP 02 033367 A (DAIYU SHOJI:KK), 2 February 1990 (1990-02-02)

## Description

This invention relates to the formation of sheet material from fibres particularly using a process known as hydroentanglement or spunlacing.

Prior patent application PCT/GB 01/02451 describes the use of hydroentanglement (or spunlacing) to produce a high quality reconstituted leather sheet material from waste leather fibres.

A feature.of the procedure described in the prior application is the use of specialised screens through which hydroentangling jets are directed at high pressure, in contrast to previously known procedures where entangling commences at low pressure until the fibres are sufficiently interlocked to avoid disruption by the jets. Leather fibres entangle particularly readily, and with previously known procedures, they form a surface layer of entangled fibres that impedes further entanglement. This is particularly disadvantageous with thick webs needed for leather products but by using the aforesaid screens, jets can penetrate deeply at high pressure to hydroentangle throughout the depth of the web.

The difficulties with disruption and the formation of a surface layer arise because fibres resulting from the disintegration of waste leather are far shorter and finer than those normally used for hydroentangling. The screens of the prior patent application provide a means of constraining such fibres from being washed away by the jets, but even with screens it is difficult to constrain very short fibres such as are produced by hammer milling waste leather. Also, whatever the length of fibres about half the hydroentangling energy is wasted when using screens due to the solid parts of the screen shielding significant area of the web from the jets. The loss of energy when using screens and the lower output rates from using leather fibres of greater length are inherent with the procedure of the prior application.

DE-A-19807821 describes the formation of heat or sound insulation material from base fibres mixed with bicomponent meltable synthetic fibres. The mixed fibres are entangled after melting of the synthetic fibres to form a support matrix for the base fibres. The base fibres are plant fibres, particularly flax.

WO-A-9639553 describes the formation of absorbent non-woven material from base fibres mixed with bicomponent meltable synthetic fibres. The mixed fibres are entangled with water jets after thermal pre-bonding of the synthetic fibres. The base fibres are natural fibres particularly wood and/or rayon fibres.

WO-A-0131 131 describes the formation of sound insulation material from primary fibres mechanically mixed with meltable bicomponent synthetic fibres. The primary fibres are mineral or synthetic fibres particularly glass wool fibres.

An object of the present invention is to provide a method of entangling fibres to form sheet material whereby the aforesaid problems arising from use of screens and longer fibres can be avoided or at least minimised.

According to one aspect of the invention therefore there is provided a method of forming a sheet material from a mixture of fibres comprising leather base fibres wherein the fibres are formed into a web, and the web is subjected to entanglement; characterised by the steps of mixing the leather base fibres with additional synthetic fibres, said synthetic fibres having outer meltable layers, heating to melt the outer layers of the additional synthetic fibres so as to cause such fibres to fuse together at intersections to form a network within the web, subjecting the web to entanglement to entangle the Base fibers whilst constrained by the network.

Preferably, the entanglement is hydroentanglement.

The entanglement of the method of the invention is preferably performed using high pressure jets of liquid (particularly water) preferably in multiple passes. Reference is made to the prior application for further details of such features.

In a preferred embodiment, the invention provides a method of forming sheet material with a mixture of leather fibres and man made bicomponent fibres, said bicomponent fibres having outer layers with a lower melting point than the inner cores. The mixture of fibres is formed into a web, which advances through a heating means that melts the outer layers of the bicomponent fibres so they fuse at their intersections, and form a three dimensional network throughout the web. Fine jets of water at high pressure are then directed onto the web so they penetrate deeply and hydroentangle the leather fibres while these are constrained by the network of bicomponent fibres.

Fused bicomponent supporting networks are known but not in the context of the present invention.

Such networks are used in conjunction with wood pulp fibres to impart most or all of the finished product strength for applications such as wet wipes and absorbent sanitary products. The high pressure jets used in hydroentanglement would disrupt the bonding of such network and, where such networks are used with hydroentanglement, the bicomponent fibres are fused after hydroentanglement, thereby avoiding such disruption. With the present invention the network is used for a different purpose to that of providing structural reinforcement for the end product, and entanglement is effected after fusing.

A basic requirement of entangling is that fibres must move in order to entangle, and the fused network would be expected to impede the entanglement of the fibres. Surprisingly, it has been found that leather fibres can entangle effectively within such networks even if the apparent restraining effects are enhanced by compressing the webs containing the leather and bicomponent fibres while the surfaces of the bicomponent fibres are still tacky, thereby presenting a significantly denser layer to the hydroentangling jets.

With the arrangement of the invention, the network can take over part or all of the function of the external screens used in the method of the prior patent application. However, instead of acting on the surface, the network can provide a succession of much lighter screens within the depth of the web. Each internal screen can have relatively much more open area than an external screen, but collectively they can provide an effective and improved alternative to the external screen of the prior application. In particular the network of internal screens allows hydroentangling jets to penetrate deeply at pressures that would otherwise disrupt the web.

Apart from replacing the function of the screens, the bicomponent network can also improve the way the leather fibres hydroentangle. One of the difficulties of hydroentangling leather fibres is that even when using screens they consolidate so readily that they impede drainage of water through the web and the resulting flooding can prevent optimum entanglement. However, the three dimensional structure of the bicomponent network can even out the rate of consolidation of the web, which together with the deep penetration can assist the drainage of water through the web until full entanglement is achieved.

It is believed that this drainage effect is achieved by the three-dimensional network of bicomponent fibres providing a resilient restraint to compaction within the body of leather fibres. It is desirable to ensure that the network does not hold the leather fibres away from each other to the extent that there is insufficient proximity for them to entangle well with each other since this could result in a spongy material less desirable for leather products. This effect can be reduced or prevented by reducing the quantity of bicomponent fibres in the mix and/or using bicomponents of lower diameter and/or lower elastic modulus.

In normal hydroentangling practice most of the fibres can start off too far apart to entangle effectively, and a first pass through the jets is used to bring the fibres close enough to entangle. In a preferred embodiment of the present invention, the fibres are brought into closer proximity before entangling commences by compressing the web containing the bicomponent network before the fused junctions of the network solidify. This can more than halve the thickness of the web compared to conventional practice and can effectively eliminate the first hydroentangling stage used in conventional practice.

In the method of the prior application the external screen helped to compress the web at the first stage of entanglement, but this can incur significant loss of hydroentangling energy because of the surface area of the web being shielded from the jets. However in the present invention the solid parts of the internal bicomponent screens can be relatively insubstantial so there can be substantially less shielding of hydroentangling jets from the fibres. This can reduce the number of passes needed by the jets over the web to achieve full entanglement and reduce the energy consumed. Typical production speeds can also increase from 6 m/min mentioned in the prior application to over 10 m/min in the present invention.

Being relatively fine, the bicomponent network may be less effective than externally applied screens for masking the furrows in the surface caused by the jets. Accordingly, with the method of the present invention external screens may additionally be used (which may be generally of the kind described in the prior application) in at least one pass to eliminate or at least reduce or substantially prevent formation of surface furrows by the hydro-entanglement jets. In so far as the bicomponent network acts as a series of internal screens, externally applied screens can have more open area than the preferred openings described in the prior patent application thereby reducing the loss of energy. Such external screens still waste some energy, but they can be confined to passes where they are needed to mask jet lines. Typically this can be the last pass on the finish face, and possibly the first pass so that the jets bite less deeply while the fibres are least entangled.

The prior patent application describes a method for producing long leather fibres to improve performance of the finished product but such fibres also pass more slowly through the preferred equipment for air-laying the webs. However with the present invention, short leather fibres can be used without necessarily adversely affecting product performance because the network can reduce or eliminate some of the defects that arise with short leather fibres. For example, products made with short leather fibres are more liable to surface cracking, but short bicomponent fibres may still be beneficially used to enhance throughput from web laying equipment, as by fusing the bicomponent fibres to form a network, they act like much longer fibres and thereby more effectively constrain surface cracking. Short fibres are also more prone to erosion during hydroentangling, but the network of fused bicomponent fibres can considerably reduce this without interfering with the relatively small movements needed for hydroentanglement.

Unlike other fields of manufacture where short bicomponent fibres are fused at their intersections, the contribution of bicomponent fibres to primary strength can be negligible, and the proportion of such fibres in the total mix can preferably be minimised as they can seriously detract from leather-like handle. In cases where the performance of products made with short fibres needs to be significantly upgraded this can be achieved by incorporating normal, non-bicomponent fibres with a reduced proportion of bicomponent fibres.

The proportion of bicomponent fibre needed to provide the purely process benefits of the present invention can be as low as 2% of the total weight of web, and can be many times less than the percentage used in conventional applications where a bicomponent network is a primary source of strength. Apart from unacceptably increasing stiffness and coarsening the surface feel of the final product, a bicomponent network that provides significant structural contribution may reduce the attachment of leather fibres to internal reinforcing fabrics by impeding the leather fibres from locking into the interstices of the fabric.

Because of these limitations, in a preferred embodiment of the present invention bicomponent fibres are used with weak outer sheaths to promote a partial breakdown of the network as the web progresses through successive stages of hydroentangling. With each pass the increased entanglement of the leather fibres can compensate for the reduction of bonds between bicomponent fibres, and can result in end products with minimal stiffening from the network. Such a procedure would be a disadvantage in conventional practice but, as with the externally applied screens of the prior application, the main purpose of the network is to overcome processing problems peculiar to hydroentangling rather than providing structural strength.

Processing benefits of the bicomponent network also extend to producing the webs themselves, particularly with commercially available equipment normally used for air laying wood pulp fibres. Such processes can have high rates of production for short fibres like wood pulp, and the bicomponent network can significantly reduce the erosion of short fibres under hydroentanglement. This allows short leather fibres such as produced by hammer milling to be hydroentangled much more effectively than by the methods of the prior application.

A further processing advantage of bicomponent networks is that they can provide sufficient strength to the web before hydroentangling to allow webs to be wound onto reels at interim stages of production. This removes the need to feed webs directly from the air laying equipment to the hydroentangling line as in the method of the prior application, and allows the webs to be produced at optimum speeds determined by the air laying equipment without compromising the operation of the hydroentangling line. Thus, in one embodiment the (or each) web is wound on a reel after formation of the network, and the web is drawn from such reel to be subjected to said entanglement.

Furthermore, where the product requires two webs on either side of a reinforcing fabric, both webs can be formed using one air laying plant. Two reels of webs stabilised with bicomponent networks can then be fed to the hydroentangling line, and can result in a substantial saving of capital cost compared to the method of the prior application where two entire air laying means were required to continuously feed the hydroentangling line. Where a reinforcing fabric is used the base (leather) fibres preferably penetrate this so as to be entangled therewith.

The fibre content needed to provide adequate reel handling strength depends on web thickness, bicomponent content and the strength of the melt-able sheath on the bicomponent fibres. However, generally the percentage of bicomponent fibre needed to impart sufficient in-process strength for reel winding need be no more than the same low bicomponent content that can provide effective internal screens in the method of the present invention. This in-process strength for individual webs is well below the strength after hydroentangling, particularly after hydroentangling webs and reinforcing fabric to form a final product.

As with most fibrous products, fibre length preferably needs to be as long as possible. However, long leather fibres produced by textile reclaiming methods have a wide distribution of fibre length from around 1 mm to occasionally over 15mm, and the upper end of the distribution can cause very slow production rates using air laying equipment designed for wood pulp fibres. It can therefore be preferable to limit the maximum length of such fibres to around 6 mm, for example by passing them through a conventional granulating machine (taking care to avoid shortening more than necessary to make a worthwhile improvement in air laying output). Such methods of shortening fibres can be very approximate, but preferably at least 90% of the fibres should be less than 6mm for efficient air laying. Thus, in the method of the invention, in order to obtain improved throughput from air-laying equipment designed for wood pulp fibres, at least 90% of the base fibres have a maximum fibre length of 6mm.

In the case of hammer milled leather fibres there is also a wide distribution of fibre lengths, but lengths are generally much less than produced by textile reclaiming methods. Typically the maximum length may be around 3 mm and, as with fibres produced by textile reclaiming methods, the average fibre length is significantly less than the maximum. No granulation is required for hammer milled fibres, but the much shorter length can result in a need to increase average length of the mix by adding manmade fibres of predetermined optimum length in order to improve the physical properties of the final product.

Unlike leather fibres, manmade fibres can be chopped to a constant length so they can all be of a length that provides the optimum balance between air laying throughput and performance of the finished product. For air laying equipment designed for wood pulp, the length of manmade inclusions may be around 6 mm, but recent improvements in air laying technique may make it feasible to increase this to over 10 mm. These indicative fibre lengths apply typically to bicomponent and non-bicomponent manmade fibres in the 1.7 dtex to 3.0 range. Finer fibres can significantly reduce air laying output unless fibre length is reduced appropriately.

Air laying speeds vary considerably depending not only on fibre length and diameter, but also on the smoothness and shape of fibres. In these respects leather fibres are particularly unfavourable regarding air laying throughput, as they are usually curly and have finely fibrillated branches that can impede flow through the perforated distribution screens of air laying equipment. Air laying rate for un-granulated leather fibres produced by textile reclaiming methods can be as low as 3 m/min for a 200gsm web, but this can be more than doubled if the fibres are shortened. Laying rates for manmade and pulp fibres can be considerably faster.

Regarding the percentage of bicomponent fibre in the mix, it is generally preferable to keep this to the minimum as described earlier. The degree to which the bicomponent network compromises leather-like handle depends on end use, and for shoes the greater stiffness and wearing properties conferred by the bicomponent network can be more acceptable or even be of benefit compared to (for example) clothing leather. For shoes up to 10% of 3.0 dtex bicomponent can be used, but to obtain better handle it can be preferable to use under 5% bicomponent and a greater proportion of non-bicomponent fibres. In general the overall range for additional synthetic fibres is 2% to 10% by weight with a preference towards the lower end of the range.

From the viewpoint of providing effective internal screens, the number of bicomponent fibres can be as significant as their percentage by weight of total mix. For example, reducing from 3.0 to 1.7 dtex in a 5% mix would proportionately increase the number of fibres in the mix, and to obtain a similar screen effect, the percentage of 1.7 dtex fibres may need to reduce to below 3%. Using finer bicomponent fibres can also provide better surface feel to the finished product, which is an added benefit.

Commercially available bicomponent fibres are generally not less than 1.7 dtex, but end product handle can be improved by choosing bicomponents with a low elastic modulus, such as polypropylene. These usually have polyethylene melt-able sheaths that are not particularly strong but can still provide sufficient reel handling strength even at low percentage additions. As mentioned earlier some degree of bond weakness can be an advantage for some product applications as this can improve the handle of the final product. In applications where more stiffness is acceptable or required, stronger bicomponents can be used, such as polyester with nylon sheaths.

Bonding between bicomponent fibres at their intersections can be achieved by passing hot air through the web to melt the outer coating while the fibres are held between porous belts. The bond may not be strong enough to link short fibres together to contribute significantly to the tensile strength of the final product, but the bonds may be sufficient to provide an effective network for hydroentangling and enough anchorage to resist surface cracking of the finished product.

The fused intersections of the network may be at least partially disrupted by the entanglement.

Resistance to surface cracking can be enhanced by including ordinary non-bicomponent manmade fibres in the mix. Such fibres can also significantly improve peel resistance of the surface coating that is usually applied to the finished product. Furthermore, being free to move, non-bonded synthetic fibres can be more readily driven by jets into the interstices of the reinforcing fabric and thereby improve peel strength between the webs and the reinforcing fabric. This is particularly important for hard wearing shoes, and relatively high percentages of such fibres (compared to bicomponent) can be used without over-stiffening the final product.

In the case of a fabric reinforcing material having one or more webs or bodies of fibres united with the fabric, the (or each) web or body may contain a higher proportion of said further synthetic material adjacent the reinforcing layer than at the outer surface thereof.

The effect on handle of such further (non-bicomponent) fibres depends on their fineness as well as their percentage of mix, and in this respect they should preferably be not more than 1.7 dtex. For minimum effect on handle, such fibres can be into the "microfibre" range of well under 1.0 dtex, and with sufficiently fine manmade fibres, adequate handle can be maintained at over 10% of total fibre content. However reducing fineness increases the number of fibres present, which in itself can change the feel of the product. Alternatively where improved peel resistance is more important than handle, coarser fibres can produce better all round results. Generally, for reasons of cost and detracting from the leather-like feel of the final product it is preferable to keep further synthetic fibre content to below 20% by weight of the end product sheet material. The range may be 5-20% by weight.

Particularly with coarser manmade fibres, even small percentages in the mix can detract from the characteristic surface feel of real leather, particularly as after buffing the superior abrasion resistance of manmade fibres can make them more prominent. In a further feature of the invention, hot air or other suitable heat sources are applied to the surface of the web after buffing at sufficient temperature to melt back the bicomponent fibres without adversely affecting the leather fibres. The technique exploits the high moisture retention of leather which keeps it cool, and its property of charring rather than melting when subjected to excess local heat. Any such charring can be brushed or lightly buffed away, leaving a substantially natural leather finish.

The invention will now be described further by way of example only and with reference to the accompanying drawings in which:
- Figure 1: is a schematic view of initial stages of one form of apparatus used in the performance of the method of the invention and which shows the main operating principles of a commercially available plant for making a fibre web with a fused bicomponent network; and
- Figure 2: shows further stages of the apparatus for combining such web with reinforcing fabric and hydroentangling the resulting sandwich.

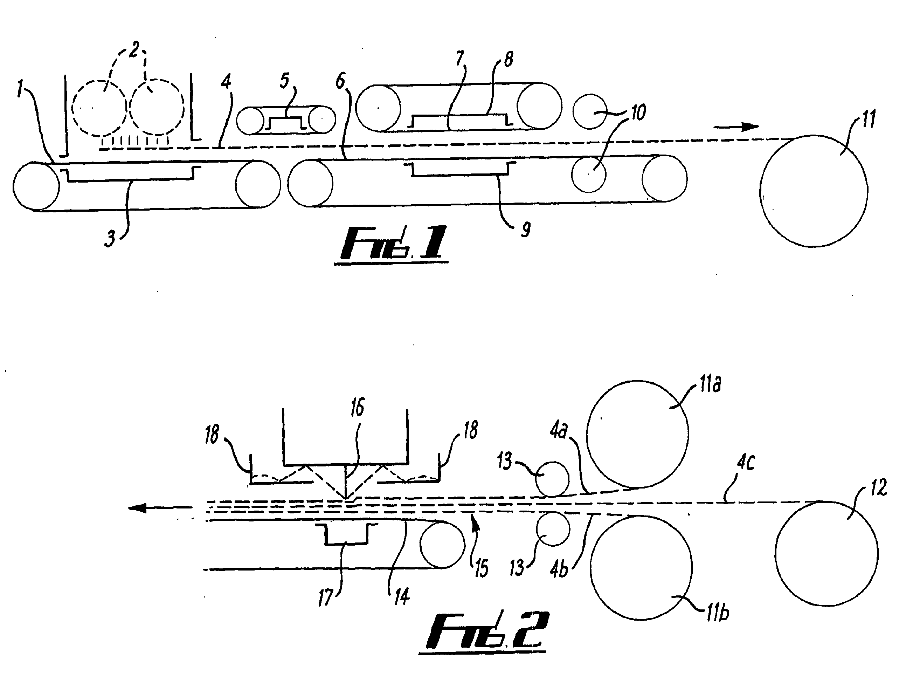

Referring to Figure 1, waste leather fibres made by textile reclaiming methods lightly chopped to a maximum length of approximately 6 mm are mixed with 4% of 1.7 dtex bicomponent fibres and 5% of 3.0 dtex standard polyester fibres both cut to constant 6 mm length. The mixture is evenly distributed at around 200 g/m2 onto a driven porous belt 1 by at least one pair of perforated drums 2 while the fibres are drawn onto the porous belt by vacuum box 3.

The resulting web 4 of evenly laid fibres is transferred by a conventional vacuum conveyor 5 to porous belts 6 and 7, which contain and partially compress the web while hot air from a box 8 is blown through belts 7 and 6 and web 4, and received by a suction box 9. The temperature of the hot air is sufficient to melt the outer sheath of the bicomponent fibres (but not the inner core) and thereby fuse the fibres together at their intersections.

Before the melted sheaths at the intersections of the bicomponent fibres solidify, the web may be compressed by nip rollers 10 to form a denser web consisting of un-bonded leather and polyester fibres supported by a three-dimensional network of fused bicomponent fibres. On solidification of the intersections the network provides sufficient strength for the web to be wound onto reel 11 for transport and/or storage.

Referring to Figure 2, two such webs 4a and 4b unwind from reels 11 a and 11 b together with fabric reinforcement 4c from reel 12, and are brought together by rollers 13 to feed onto a porous belt 14. Webs 4a, 4b and fabric 4c comprising a composite web 1 5 are conveyed by belt 14 through hydroentangling jets 16, and water from the jets is drawn through web 15 and porous belt 14 by vacuum box 17. Water rebounding from the surface of the composite web is collected in trays 18 and conveyed away as described more fully in the prior application.

For complete hydroentanglement the composite web is passed through a plurality of successive hydroentanglement stages, one or more of which may incorporate a screen applied over the surface of the web 15. Hydroentanglement stages are arranged so that jets can be applied to both surfaces of the web, and for the present example, such application of jets is on alternate sides through 5 such stages at a speed of 10 m/min.

In this example perforated screens with an open area of approximately 60% made from chemically etched stainless steel of the type described in the prior application are applied to each side of the web for the final stage of hydroentangling in order to mask the furrow marks from the jets. To prevent coincidence lines forming on the surface, the pitch of the apertures of the screen is made the same as the pitch of the jet orifices.

Jet orifices for this example are 140 microns at 0.9 mm centres, and when applied through the screens, jet pressures can be at the maximum normally available in commercial hydroentangling equipment at 200 bar. Pressures without the screen may be reduced slightly to 1 80 bar, and unlike similar webs without a bicomponent network, this same high pressure can be applied at the first stage of hydroentangling without the need for an external screen.

The resulting hydroentangled web may be finished by impregnating with emulsified oils, pigments and pigment fixatives as may be applied to natural leather, followed by drying and buffing both sides. The side that received three hydroentangling stages (and therefore has a higher degree of entanglement and attachment to the reinforcing fabric) can then be coated with a leather-like finish by conventional means as used for coating synthetic leather.

The foregoing procedures may be suitable for shoe material, but for un-coated materials such as for clothing suede, web 4 may be on one side only of the reinforcing fabric and four hydroentangling stages applied, all onto the side having the web. After buffing and impregnation the web face may be treated with hot air to cause the projecting manmade fibres to melt and the surface brushed to remove any slight charring leaving a finish closely similar to natural leather.

The resulting sheet material is a high quality reconstituted leather having an excellent feel, strength and surface finish.

It is of course to be understood that the invention is not intended to be restricted to the details of the above embodiment which are described by way of example only.

Thus, for example, the web may be wet laid, although there can be disadvantages with this.

As described in the prior patent application, webs can be wet laid by methods normally used for paper making or by carding if sufficiently long textile fibres are included to carry the leather fibres through the carding process. The use of bicomponent fibres which are added or which make up the carrier fibres provides a "screen" for hydroentangling according to the present invention. For effective carding, normally over 5% of 1.7 decitex carrier fibres of 20 mm or more is needed, and the leather fibres need to be made by textile reclaiming methods to be long enough to avoid excessive ejection of fines. For wet laying, the bicomponent fibres need to be short and the webs dried before fusing. This may not be wholly satisfactory when the next step is to wet the webs again for hydroentangling, while the disadvantages of carding include slow rates of production and wastage from the ejection of fine fibres.

A wide variety of variations are feasible within the scope of this invention. Jet orifice size, screen details, production speeds and other details provided in the prior application can broadly apply to the present invention. The main departure is the reduced application of surface screens, and to ensure good attachment to the reinforcing core, it is often desirable to hydroentangle on alternate sides of the fabric so that fibres are pushed evenly into the interstices of the fabric. Also, due to the stabilising effect of the bicomponent network, pressures can be higher and leather fibres shorter than in the method of the prior application.

Product compositions can vary widely and thickness of the web between the final coated surface and the internal reinforcing layer can differ substantially from the web forming the back layer. For example, instead of the equal webs implied in the previously described example, the front one may be 150 g/m2 and contain 15% non-bicomponent synthetic fibres and the back may be 250 g/m2 and contain 0% of non-bicomponent fibre. The bicomponent content for both webs, however, may be constant at 4%.

Fibre lengths can be determined largely by the production limitations of commercial web laying equipment and, where alternative web laying equipment (such as carding) can handle long manmade fibres, it may not be necessary to incorporate fabric reinforcement. Also, where jet markings are acceptable in the finished product, there may be no need for surface applied screens. Alternatively, screens may be used extensively to supplement the internal screens of the bicomponent network, particularly if the latter are very light and the leather fibres are particularly short.

Hydroentangling speeds can vary widely depending on a whole range of parameters, including weight per unit area of material being hydroentangled, open area of fabric reinforcement, jet pressures, jet diameter, jet spacing, number of passes through the jets, weight of bicomponent network, type of leather fibre, number of passes using external screens, and open area of screens. Generally lighter webs can be hydroentangled at faster speeds, and typically 600 g/m2 material may require 6 m/minute while 200 g/m2 may entangle fully at 15 m/min.

The choice of using relatively long waste leather fibres made by textile reclaiming methods or short ones made by milling (such as conventional hammer or disk milling) can depend on the cost and availability of the different types of waste leather. Milling is cheaper and can use waste leather shavings, which are usually cheaper than the sheet waste used in textile reclaiming plant. However end product quality can be lower and more costly manmade fibre additions may be needed to achieve acceptable performance. Blends of both types of waste fibre can also be used for intermediate quality products.

As with the prior application, the main limitation in weight of composite webs that can be hydroentangled is the onset of hydroentanglement itself as this reduces permeability to the jets and constricts further entanglement. Such constriction is far greater with leather fibres than conventional synthetic fibres but, by using the methods of this invention, it is possible to make acceptable product at relatively high composite web weights of around 600 g/m2. Producing acceptable quality end product at much above this weight is possible but becomes increasingly difficult. Lighter webs are easier to hydroentangle, and minimum web weights can be set more by limits of web forming accuracy and limited market demand for exceptionally thin leather products.

The inter-relationships between all the foregoing parameters are complex and can vary considerably for different types of end product. An optimum balance between output rate, cost and finished product performance can be established by conducting empirical trials within the broad guidance provided in this patent application. The bicomponent network and associated features of the present invention assist considerably in improving production rate and product quality at lower cost compared to the methods of the prior application.

## Claims

1. A method of forming a sheet material from a mixture of fibres comprising leather base fibres wherein the fibres are formed into a web, and the web is subjected to entanglement; **characterised by** the steps of mixing the leather base fibres with additional synthetic fibres, said synthetic fibres having outer meltable layers, heating to melt the outer layers of the additional synthetic fibres so as to cause such fibres to fuse together at intersections to form a network within the web, subjecting the web to entonglement to entangle the base fibers whilst constrained by the network.

2. A method according to claim 1 **characterised in that** the said entanglement comprises hydroentanglement.

3. A method according to claim 2 **characterised in that** the hydroentanglement is performed with high pressure jets of liquid which penetrate the network.

4. A method according to claim 2 or 3 **characterised in that** the hydroentanglement is performed with high pressure jets of liquid applied from the opposite sides of the web.

5. A method according to any one of claims 2 to 4 **characterised in that** the hydroentanglement is preformed with high pressure jets of liquid and a water receiving structure is provided to receive bounced back liquid.

6. A method according to any one of claims 2 to 5 **characterised in that** the entanglement is performed using high pressure jets of liquid in multiple passes.

7. A method according to any one of claims 3 to 6 **characterised in that** the liquid is water.

8. A method according to any one of claims 3 to 7 **characterised in that** the hydroentanglement is performed with a screen or screens between the web and the jets in at least one said pass.

9. A method according to claim 8 **characterised in that** the screen is at least 60% open.

10. A method according to claim 8 or 9 **characterised in that** the screen has openings with a pitch the same as that of the jets.

11. A method according to any one of claims 8 to 10 **characterised in that** the screen is such as to substantially prevent formation of furrows by the hydroentanglement jets.

12. A method according to any one of claims 2 to 11 **characterised in that** the hydroentanglement is performed with the web advancing at a speed greater than 6m/min.

13. A method according to any one of claims 2 to 12 **characterised in that** at least 90% of the base fibres have a maximum fibre length of 6mm.

14. A method according to any one of claims 2 to 13 **characterised in that** the additional synthetic fibres have a maximum fibre length of 10mm.

15. A method according to any one of claims 2 to 14 **characterised in that** the additional synthetic fibres constitute 2-10% of the weight of the mixture of fibres.

16. A method according to any one of claims 2 to 14 **characterised in that** the additional synthetic fibres constitute up to 5% of the weight of the mixture of fibres.

17. A method according to any one of claims 2 to 16 **characterised in that** the additional synthetic fibres are in the range 1.7 to 3.0 dtex.

18. A method according to any one of claims 2 to 17 **characterised in that** the additional synthetic fibres are bicomponent fibres having outer layers with a lower melting point than inner cores thereof.

19. A method according to claim 18 **characterised in that** the outer layers are polyethylene and the inner cores are polyester or polypropylene.

20. A method according to any one of claims 2 to 19 **characterised in that** the said mixture of fibres also includes further synthetic fibres which are not melted to fuse together.

21. A method according to claim 20 **characterised in that** the further synthetic fibres are less than 1.0 dtex.

22. A method according to claim 20 or 21 **characterised in that** the further fibres make up 5-20% by weight of the material.

23. A method according to any one of claims 1 to 22 **characterised in that** the base fibres have lengths of less than 3mm.

24. A method according to any one of claims 1 to 23 **characterised in that** the outer layers of the additional synthetic fibres are melted by passing hot air through the web.

25. A method according to claim 24 **characterised in that** the web is held between porous belts during passage of the hot air through the web.

26. A method according to any one of claims 1 to 25 **characterised in that** the surface of the entangled web is subjected to heat to melt said additional synthetic fibres at said surface.

27. A method according to any one of claims 1 to 26 **characterised in that** the surface of the entangled web is buffed.

28. A method according to claim 26 **characterised in that** the surface of the entangled web is buffed before said heating of the surface of the web.

29. A method according to any one of claims 1 to 28 **characterised in that** two separate said webs are united on opposite sides of a reinforcing fabric prior to entanglement.

30. A method according to claim 29 **characterised in that** the said base fibres are entangled with the reinforcing fabric.

31. A method according to any one of claims 1 to 30 **characterised in that** the (or each) web is wound on a reel after formation of the network, and the web is drawn from such reel to be subjected to said entanglement.

32. A method according to any one of claims 1 to 31 **characterised in that** the fused intersections of the network are at least partially disrupted by the entanglement.

33. A method according to any one of claims 1 to 29 **characterised in that** the network is predominantly open whereby solid parts of the network make up a minor proportion of its structure.

34. A method according to any one of claims 1 to 33 **characterised in that** the said mixture of fibres is compressed after melting of the additional synthetic fibres but before they have fused together and solidified at the intersections.

35. Sheet material formed using the method of any one of claims 1 to 34.

36. A sheet material comprising at least one body of entangled fibres comprising base fibres wherein an openwork structure extends within the body so as to be penetrated by the base fibres, said openwork structure being defined by a network of additional synthetic fibres fused together at intersections thereof, and wherein the network makes up a minor proportion by weight of the sheet material, **characterised in that** the base fibres are leather fibres.

37. A sheet material according to claim 36 **characterised in that** the leather fibres have a maximum fibre length of 6mm.

38. A sheet material according to claim 36 or 37 **characterised in that** 90% of the additional synthetic fibres have a maximum fibre length of 10mm.

39. A sheet material according to any one of claims 36 to 38 **characterised in that** the additional synthetic fibres constitute 10% of the weight of the sheet material.

40. A sheet material according to claim 39 **characterised in that** the additional synthetic fibres constitute up to 5% of the weight of the sheet material.

41. A sheet material according to any one of claims 36 to 40 **characterised in that** the additional synthetic fibres are bicomponent fibres having outer layers with a lower melting point than inner cores thereof.

42. A sheet material according to claim 41 **characterised in that** the outer layers are polyethylene and the inner cores are polyester or polypropylene.

43. A sheet material according to any one of claims 36 to 42 **characterised in that** the additional synthetic fibres are in the range 1.7 to 3.0 dtex.

44. A sheet material according to any one of claims 36 to 43 **characterised in that** the said body of entangled fibres also includes further synthetic fibres which are not melted to fuse together.

45. A sheet material according to any one of claims 36 to 44 **characterised in that** the further synthetic fibres are less than 1.0 dtex.

46. A sheet material according to claim 44 or 45 **characterised in that** the further synthetic fibres make up less than 20% by weight of the sheet material.

47. A sheet material according to any one of claims 36 to 46 **characterised in that** the leather fibres have lengths of less than 3mm.

48. A sheet material according to any one of claims 36 to 47 **characterised in that** the network is predominantly open whereby solid parts of the network make up a minor proportion of its structure.

49. A sheet material according to any one of claims 36 to 49 comprising two said bodies united on opposite sides of a fabric layer.

50. A sheet material according to claim 49 **characterised in that** the said leather fibres penetrate the fabric layer.

51. A sheet material according to claim 49 or 50 and claim 44 or any claim dependent thereon **characterised in that** the (or each) body contains a higher proportion of said further synthetic material adjacent the reinforcing layer than at the outer surface thereof.

## Revendications

1. Procédé pour former un matériau en feuille à partir d'un mélange de fibres comprenant des fibres de base en cuir, dans lequel les fibres se présentent sous forme de voile, et le voile est soumis à un entre-mêlement, **caractérisé par** des étapes consistant à mélanger les fibres de base en cuir à des fibres synthétiques additionnelles, lesdites fibres synthétiques ayant des couches externes fusibles, procéder à un chauffage de manière à faire fondre les couches externes des fibres synthétiques additionnelles de manière que ces fibres se fondent les unes aux autres aux intersections afin de former un réseau dans le voile, et soumettre le voile à un entre-mêlement de manière à entre-mêler les fibres de base pendant qu'elles sont contraintes par le réseau.

2. Procédé selon la revendication 1, **caractérisé en ce que** ledit entre-mêlement consiste en un hydro-entre-mêlement.

3. Procédé selon la revendication 2, **caractérisé en ce que** ledit hydro-entre-mêlement est réalisé à l'aide de jets à haute pression d'un liquide qui pénètre dans le réseau.

4. Procédé selon la revendication 2 ou 3, **caractérisé en ce que** ledit hydro-entre-mêlement est réalisé à l'aide de jets à haute pression d'un liquide qui est appliqué depuis les côtés opposés du voile.

5. Procédé selon l'une quelconque des revendications 2 à 4, **caractérisé en ce que** ledit hydro-entre-mêlement est réalisé à l'aide de jets à haute pression d'un liquide, et qu'une structure de réception d'eau est prévue pour recevoir le liquide qui a rebondi.

6. Procédé selon l'une quelconque des revendications 2 à 5, **caractérisé en ce que** ledit hydro-entre-mêlement est réalisé à l'aide de jets à haute pression d'un liquide au cours de plusieurs passes.

7. Procédé selon l'une quelconque des revendications 3 à 6, **caractérisé en ce que** le liquide est de l'eau.

8. Procédé selon l'une quelconque des revendications 3 à 7, **caractérisé en ce que** ledit hydro-entre-mêlement est réalisé à l'aide d'un écran ou de plusieurs écrans entre le voile et les jets au cours d'au moins une passe.

9. Procédé selon la revendication 8, **caractérisé en ce que** l'écran est ouvert à au moins 60 %.

10. Procédé selon la revendication 8 ou 9, **caractérisé en ce que** l'écran comporte des ouvertures dont le pas est identique à celui des jets.

11. Procédé selon l'une quelconque des revendications 8 à 10, **caractérisé en ce que** l'écran est conçu de manière à empêcher essentiellement la formation de sillons par les jets d'hydro-entre-mêlement.

12. Procédé selon l'une quelconque des revendications 2 à 11, **caractérisé en ce que** l'hydro-entre-mêlement est réalisé lorsque le voile se déplace à une vitesse supérieure à 6 m/min.

13. Procédé selon l'une quelconque des revendications 2 à 12, **caractérisé en ce qu'**au moins 90 % des fibres de base ont une longueur de fibre maximale de 6 mm.

14. Procédé selon l'une quelconque des revendications 2 à 13, **caractérisé en ce que** les fibres synthétiques additionnelles ont une longueur de fibre maximale de 10 mm.

15. Procédé selon l'une quelconque des revendications 2 à 14, **caractérisé en ce que** les fibres synthétiques additionnelles constituent de 2 à 10 % du poids du mélange de fibres.

16. Procédé selon l'une quelconque des revendications 2 à 14, **caractérisé en ce que** les fibres synthétiques additionnelles constituent jusqu'à 5 % du poids du mélange de fibres.

17. Procédé selon l'une quelconque des revendications 2 à 16, **caractérisé en ce que** les fibres synthétiques additionnelles se situent dans une plage de 1,7 à 3,0 dtex.

18. Procédé selon l'une quelconque des revendications 2 à 17, **caractérisé en ce que** les fibres synthétiques additionnelles sont des fibres bi-composants et dont les couches externes ont un point de fusion inférieur à celui de l'âme interne.

19. Procédé selon la revendication 18, **caractérisé en ce que** les couches externes sont faites de polyéthylène tandis que les âmes internes sont faites de polyester ou de polypropylène.

20. Procédé selon l'une quelconque des revendications 2 à 19, **caractérisé en ce que** ledit mélange de fibres comprend également d'autres fibres synthétiques qui ne sont pas fondues pour se fondre les unes aux autres.

21. Procédé selon la revendication 20, **caractérisé en ce que** les autres fibres synthétiques sont inférieures à 1,0 dtex.

22. Procédé selon la revendication 20 ou 21, **caractérisé en ce que** les autres fibres représentent de 5 à 20 % du poids du matériau.

23. Procédé selon l'une quelconque des revendications 1 à 22, **caractérisé en ce que** les fibres de base ont une longueur de moins de 3 mm.

24. Procédé selon l'une quelconque des revendications 1 à 23, **caractérisé en ce que** les couches externes des fibres synthétiques additionnelles sont fondues en faisant passer de l'air chaud à travers le voile.

25. Procédé selon la revendication 24, **caractérisé en ce que** le voile est maintenu entre des courroies poreuses pendant le passage de l'air chaud à travers le voile.

26. Procédé selon l'une quelconque des revendications 1 à 25, **caractérisé en ce que** la surface du voile entre-mêlé est soumise à de la chaleur de manière à faire fondre lesdites fibres synthétiques additionnelles au niveau de ladite surface.

27. Procédé selon l'une quelconque des revendications 1 à 26, **caractérisé en ce que** la surface du voile entre-mêlé est polie.

28. Procédé selon la revendication 26, **caractérisé en ce que** la surface du voile entre-mêlé est polie avant de chauffer la surface du voile.

29. Procédé selon l'une quelconque des revendications 1 à 28, **caractérisé en ce que** deux voiles séparés sont unis sur les côtés opposés d'un tissu de renfort avant l'entre-mêlement.

30. Procédé selon la revendication 29, **caractérisé en ce que** lesdites fibres de base sont entre-mêlées avec le tissu de renfort.

31. Procédé selon l'une quelconque des revendications 1 à 30, **caractérisé en ce que** le voile (ou chaque voile) est enroulé sur un rouleau après la formation du réseau, et **en ce que** le voile est tiré de ce rouleau afin d'être soumis audit entre-mêlement.

32. Procédé selon l'une quelconque des revendications 1 à 31, **caractérisé en ce que** les intersections fondues du réseau sont au moins partiellement rompues par l'entre-mêlement.

33. Procédé selon l'une quelconque des revendications 1 à 29, **caractérisé en ce que** le réseau est, de manière prédominante, ouvert, les parties solides du réseau représentant une proportion mineure de sa structure.

34. Procédé selon l'une quelconque des revendications 1 à 33, **caractérisé en ce que** ledit mélange de fibres est comprimé après la fusion des fibres synthétiques additionnelles mais avant qu'elles se soient fondues les unes aux autres et se soient solidifiées au niveau des intersections.

35. Matériau en feuille fabriqué selon le procédé de l'une quelconque des revendications 1 à 34.

36. Matériau en feuille comprenant au moins un corps fait de fibres entre-mêlées comprenant des fibres de base, dans lequel une structure de type ouverte s'étend dans le corps de manière à être pénétrée par les fibres de base, laquelle structure de type ouverte est définie par un réseau de fibres synthétiques additionnelles fondues les unes aux autres au niveau de leurs intersections, et dans lequel le réseau représente une partie mineure en poids du matériau de type feuille, **caractérisé en ce que** les fibres de base sont des fibres de cuir.

37. Matériau en feuille selon la revendication 36,
**caractérisé en ce que** les fibres de cuir ont une longueur maximale de 6 mm.

38. Matériau en feuille selon la revendication 36 ou 37, **caractérisé en ce que** 90 % des fibres synthétiques additionnelles ont une longueur de fibre maximale de 10 mm.

39. Matériau en feuille selon l'une quelconque des revendications 36 à 38, **caractérisé en ce que** les fibres synthétiques additionnelles constituent 10 % du poids du matériau de type feuille.

40. Matériau en feuille selon la revendication 39,
**caractérisé en ce que** les fibres synthétiques additionnelles constituent jusqu'à 5 % du poids du matériau de type feuille.

41. Matériau en feuille selon l'une quelconque des revendications 36 à 40, **caractérisé en ce que** les fibres synthétiques additionnelles sont des fibres bi-composants et dont les couches externes ont un point de fusion inférieur à celui de l'âme interne.

42. Matériau en feuille selon la revendication 41,
**caractérisé en ce que** les couches externes sont faites de polyéthylène tandis que les âmes internes sont faites de polyester ou de polypropylène.

43. Matériau en feuille selon l'une quelconque des revendications 36 à 42, **caractérisé en ce que** les fibres synthétiques additionnelles se situent dans une plage de 1,7 à 3,0 dtex.

44. Matériau en feuille selon l'une quelconque des revendications 36 à 43, **caractérisé en ce que** ledit corps de fibres entre-mêlées comprend également d'autres fibres synthétiques qui ne sont pas fondues pour se fondre les unes aux autres.

45. Matériau en feuille selon l'une quelconque des revendications 36 à 44, **caractérisé en ce que** les autres fibres synthétiques sont inférieures à 1,0 dtex.

46. Matériau en feuille selon la revendication 44 ou 45, **caractérisé en ce que** les autres fibres représentent moins de 20 % du poids du matériau de type feuille.

47. Matériau en feuille selon l'une quelconque des revendications 36 à 46, **caractérisé en ce que** les fibres de cuir ont une longueur de moins de 3 mm.

48. Matériau en feuille selon l'une quelconque des revendications 36 à 47, **caractérisé en ce que** le réseau est, de manière prédominante, ouvert, les parties solides du réseau représentant une proportion mineure de sa structure.

49. Matériau en feuille selon l'une quelconque des revendications 36 à 49, comprenant deux desdits corps unis sur les côtés opposés d'une couche de tissu.

50. Matériau en feuille selon la revendication 49,
**caractérisé en ce que** les fibres de cuir pénètrent dans la couche de tissu.

51. Matériau en feuille selon la revendication 49 ou 50 et selon la revendication 44 ou selon toute revendication qui en dépend, **caractérisé en ce que** le corps (ou chaque corps) contient une plus grande proportion dudit autre matériau synthétique tant à proximité de la couche de renfort qu'au niveau de sa surface externe.

## Patentansprüche

1. Verfahren zur Bildung eines Schichtmaterials aus einer Fasermischung mit Ledergrundfasern, wobei die Fasern in ein Gewebe hinein gebildet werden, und das Gewebe einer Verwicklung unterzogen wird;
**gekennzeichnet durch** die Schritte des Vermischens der Ledergrundfasern mit zusätzlichen synthetischen Fasern, wobei die synthetischen Fasern äußere schmelzbare Schichten aufweisen, dem Erhitzen zum Schmelzen der äußeren Schichten der zusätzlichen synthetischen Fasern, um ein Verschmelzen derartiger Fasern an Überkreuzungen zu bewirken, um ein Netzwerk innerhalb des Gewebes zu bilden, und dem Unterziehen des Gewebes einer Verwicklung, um die Grundfasern zu verwickeln, während das Gewebe **durch** das Netzwerk eingespannt ist.

2. Verfahren nach Anspruch 1,
**dadurch gekennzeichnet,**
**dass** die Verwicklung eine Hydroverwicklung einschließt.

3. Verfahren nach Anspruch 2,
**dadurch gekennzeichnet ,**
**dass** die Hydroverwicklung mit Hochdruckstrahlen aus einer Flüssigkeit durchgeführt wird, die das Netzwerk durchdringen.

4. Verfahren nach Anspruch 2 oder 3,
**dadurch gekennzeichnet,**
**dass** die Hydroverwicklung mit Hochdruckstrahlen aus einer Flüssigkeit durchgeführt wird, die von den gegenüberliegenden Seiten des Gewebes eingesetzt werden.

5. Verfahren nach einem der Ansprüche 2 bis 4,
**dadurch gekennzeichnet ,**
**dass** die Hydroverwicklung mit Hochdruckstrahlen aus einer Flüssigkeit durchgeführt wird, und eine Wasseraufnahmestruktur vorgesehen ist, um zurückgeworfene Flüssigkeit aufzunehmen.

6. Verfahren nach einem der Ansprüche 2 bis 5,
**dadurch gekennzeichnet ,**
**dass** die Verwicklung unter Verwendung von Hochdruckstrahlen aus einer Flüssigkeit in mehrfachen Durchgängen durchgeführt wird.

7. Verfahren nach einem der Ansprüche 3 bis 6,
**dadurch gekennzeichnet,**
**dass** die Flüssigkeit Wasser ist.

8. Verfahren nach einem der Ansprüche 3 bis 7,
**dadurch gekennzeichnet ,**
**dass** die Hydroverwicklung in zumindest einem Durchgang mit einem oder mehreren Sieben zwischen dem Gewebe und den Strahlen durchgeführt wird.

9. Verfahren nach Anspruch 8,
**dadurch gekennzeichnet ,**
**dass** das Sieb zumindest zu 60% offen ist.

10. Verfahren nach Anspruch 8 oder 9,
**dadurch gekennzeichnet ,**
**dass** das Sieb Öffnungen mit einer gleichen Teilung wie die der Strahlen aufweist.

11. Verfahren nach einem der Ansprüche 8 bis 10,
**dadurch gekennzeichnet ,**
**dass** das Sieb derart ist, die Bildung von Furchen durch die Hydroverwicklung zu verhindern.

12. Verfahren nach einem der Ansprüche 2 bis 11,
**dadurch gekennzeichnet ,**
**dass** die Hydroverwicklung durchgeführt wird, während sich das Gewebe mit einer Geschwindigkeit von mehr als 6 m/min. vorwärts bewegt.

13. Verfahren nach einem der Ansprüche 2 bis 12,
**dadurch gekennzeichnet ,**
**dass** zumindest 90% der Grundfasern eine maximale Faserlänge von 6 mm aufweisen.

14. Verfahren nach einem der Ansprüche 2 bis 13,
**dadurch gekennzeichnet ,**
**dass** die zusätzlichen synthetischen Fasern eine maximale Faserlänge von 10 mm aufweisen.

15. Verfahren nach einem der Ansprüche 2 bis 14,
**dadurch gekennzeichnet ,**
**dass** die zusätzlichen synthetischen Fasern 2 bis 10% des Gewichts der Fasermischung bilden.

16. Verfahren nach einem der Ansprüche 2 bis 14,
**dadurch gekennzeichnet ,**
**dass** die zusätzlichen synthetischen Fasern bis zu 5% des Gewichts der Fasermischung bilden.

17. Verfahren nach einem der Ansprüche 2 bis 16,
**dadurch gekennzeichnet ,**
**dass** die zusätzlichen synthetischen Fasern in dem Bereich von 1,7 bis 3,0 dtex vorliegen.

18. Verfahren nach einem der Ansprüche 2 bis 17,
**dadurch gekennzeichnet ,**
**dass** die zusätzlichen synthetischen Fasern zweikomponentige Fasern sind, die äußere Schichten mit einem niedrigeren Schmelzpunkt als deren inneren Kerne aufweisen.

19. Verfahren nach Anspruch 18,
**dadurch gekennzeichnet,**
**dass** die äußeren Schichten Polyethylen sind und die inneren Kerne Polyester oder Polypropylen sind.

20. Verfahren nach einem der Ansprüche 2 bis 19,
**dadurch gekennzeichnet ,**
**dass** die Fasermischung auch weitere synthetische Fasern enthält, die nicht geschmolzen werden um miteinander zu verschmelzen.

21. Verfahren nach Anspruch 20,
**dadurch gekennzeichnet,**
**dass** die weiteren synthetischen Fasern weniger als 1,0 dtex betragen.

22. Verfahren nach Anspruch 20 oder 21,
**dadurch gekennzeichnet ,**
**dass** die weiteren Fasern 5 bis 20 Gew.-% des Materials bilden.

23. Verfahren nach einem der Ansprüche 1 bis 22,
**dadurch gekennzeichnet ,**
**dass** die Grundfasern Längen von weniger als 3 mm aufweisen.

24. Verfahren nach einem der Ansprüche 1 bis 23,
**dadurch gekennzeichnet ,**
**dass** die äußeren Schichten der zusätzlichen synthetischen Fasern durch Hindurchströmen von heißer Luft durch das Gewebe geschmolzen werden.

25. Verfahren nach Anspruch 24,
**dadurch gekennzeichnet ,**
**dass** das Gewebe während des Durchströmens der heißen Luft durch das Gewebe zwischen porösen Bändern gehalten wird.

26. Verfahren nach einem der Ansprüche 1 bis 25,
**dadurch gekennzeichnet ,**
**dass** die Oberfläche des verwickelten Gewebes Hitzeeinwirkung unterzogen wird, um die zusätzlichen synthetischen Fasern an der Oberfläche zu schmelzen.

27. Verfahren nach einem der Ansprüche 1 bis 26,
**dadurch gekennzeichnet ,**
**dass** die Oberfläche des verwickelten Gewebes geschwabbelt wird.

28. Verfahren nach Anspruch 26,
**dadurch gekennzeichnet ,**
**dass** das verwickelte Gewebe vor dem Aufheizen der Oberfläche des Gewebes geschwabbelt wird.

29. Verfahren nach einem der Ansprüche 1 bis 28,
**dadurch gekennzeichnet ,**
**dass** zwei getrennte Gewebe vor dem Verwickeln an gegenüberliegenden Seiten eines Verstärkungsstoffes verbunden werden.

30. Verfahren nach Anspruch 29,
**dadurch gekennzeichnet ,**
**dass** die Grundfasern mit dem Verstärkungsstoff verwickelt werden.

31. Verfahren nach einem der Ansprüche 1 bis 30,
**dadurch gekennzeichnet ,**
**dass** das (oder jedes) Gewebe nach der Bildung des Netzwerkes auf eine Spule aufgewickelt wird, und das Gewebe von einer derartigen Spule abgezogen wird, um der Verwicklung unterzogen zu werden.

32. Verfahren nach einem der Ansprüche 1 bis 31,
**dadurch gekennzeichnet ,**
**dass** die verschmolzenen Überkreuzungen des Netzwerkes zumindest teilweise durch die Verwickelung unterbrochen werden.

33. Verfahren nach einem der Ansprüche 1 bis 29,
**dadurch gekennzeichnet ,**
**dass** das Netzwerk überwiegend offen ist, wodurch feste Teile des Netzwerkes einen niedrigeren Anteil an seiner Struktur bilden.

34. Verfahren nach einem der Ansprüche 1 bis 33,
**dadurch gekennzeichnet ,**
**dass** die Fasermischung nach dem Schmelzen der zusätzlichen synthetischen Fasern aber bevor sie an den Überkreuzungen miteinander verschmolzen und verfestigt wurden, komprimiert wird.

35. Schichtmaterial, das unter Verwendung des Verfahrens nach einem der Ansprüche 1 bis 34 gebildet wird.

36. Schichtmaterial mit zumindest einem Körper aus verwickelten Fasern mit Grundfasern, wobei sich eine durchbrochene Struktur innerhalb des Körpers erstreckt, um durch die Grundfasern durchdrungen zu werden, und die durchbrochene Struktur durch ein Netzwerk von zusätzlichen synthetischen Fasern definiert wird, die an deren Überkreuzungen miteinander verschmolzen sind, und wobei das Netzwerk einen geringeren Gewichtsanteil des Schichtmaterials bildet,
**dadurch gekennzeichnet ,**
**dass** die Grundfasern Lederfasern sind.

37. Schichtmaterial nach Anspruch 36,
**dadurch gekennzeichnet ,**
**dass** die Lederfasern eine maximale Faserlänge von 6 mm aufweisen.

38. Schichtmaterial nach Anspruch 36 oder 37,
**dadurch gekennzeichnet ,**
**dass** 90% der zusätzlichen synthetischen Fasern eine maximale Faserlänge von 10 mm aufweisen.

39. Schichtmaterial nach einem der Ansprüche 36 bis 38,
**dadurch gekennzeichnet ,**
**dass** die zusätzlichen synthetischen Fasern 10% des Gewichts des Schichtmaterials bilden.

40. Schichtmaterial nach Anspruch 39,
**dadurch gekennzeichnet ,**
**dass** die zusätzlichen synthetischen Fasern bis zu 5% des Gewichtes des Schichtmaterials bilden.

41. Schichtmaterial nach einem der Ansprüche 36 bis 40,
**dadurch gekennzeichnet ,**
**dass** die zusätzlichen synthetischen Fasern zweikomponentige Fasern sind, die äußere Schichten mit einem niedrigeren Schmelzpunkt als deren innere Kerne aufweisen.

42. Schichtmaterial nach Anspruch 41,
**dadurch gekennzeichnet ,**
**dass** die äußeren Schichten Polyethylen sind, und die inneren Kerne Polyester oder Polypropylen sind.

43. Schichtmaterial nach einem der Ansprüche 36 bis 42,
**dadurch gekennzeichnet ,**
**dass** die zusätzlichen synthetischen Fasern in dem Bereich von 1,7 bis 3,0 dtex vorliegen.

44. Schichtmaterial nach einem der Ansprüche 36 bis 43,
**dadurch gekennzeichnet ,**
**dass** der Körper aus verwickelten Fasern auch weitere synthetische Fasern enthält, die nicht zum miteinander verschmelzen geschmolzen sind.

45. Schichtmaterial nach einem der Ansprüche 36 bis 44,
**dadurch gekennzeichnet ,**
**dass** die weiteren synthetischen Fasern weniger als 1,0 dtex betragen.

46. Schichtmaterial nach Anspruch 44 oder 45,
**dadurch gekennzeichnet ,**
**dass** die weiteren synthetischen Fasern weniger als 20 Gew.-% des Schichtmaterials bilden.

47. Schichtmaterial nach einem der Ansprüche 36 bis 46,
**dadurch gekennzeichnet ,**
**dass** die Lederfasern Längen von weniger als 3 mm aufweisen.

48. Schichtmaterial nach einem der Ansprüche 36 bis 47,
**dadurch gekennzeichnet ,**
**dass** das Netzwerk überwiegend offen ist, wodurch feste Teile des Netzwerkes einen geringeren Anteil an seiner Struktur bilden.

49. Schichtmaterial nach einem der Ansprüche 36 bis 49 mit den zwei Körpern, die auf gegenüberliegenden Seiten einer Stoffschicht verbunden sind.

50. Schichtmaterial nach Anspruch 49,
**dadurch gekennzeichnet ,**
**dass** die Lederfasern die Stoffschicht durchdringen.

51. Schichtmaterial nach Anspruch 49 oder 50 und Anspruch 44 oder einem davon abhängigen Anspruch,
**dadurch gekennzeichnet ,**
**dass** der (oder jeder) Körper benachbart zu der Verstärkungsschicht einen höheren Anteil an dem weiteren synthetischen Material enthält, als an dessen äußeren Oberfläche.
